(19) Europäisches Patentamt
European Patent Office
Office européen des brevets

(11) Numéro de publication : 0 236 243 B1

(12) # FASCICULE DE BREVET EUROPEEN

(45) Date de publication du fascicule du brevet : **02.05.91 Bulletin 91/18**

(51) Int. Cl.$^5$ : **B21D 22/10**, C08L 83/04

(21) Numéro de dépôt : **87420034.8**

(22) Date de dépôt : **05.02.87**

(54) **Procédé pour l'emboutissage de tôle par élastoformage utilisant un support élastique en élastomère silicone de faible dureté.**

Le dossier contient des informations techniques présentées postérieurement au dépôt de la demande et ne figurant pas dans le présent fascicule.

(30) Priorité : **11.02.86 FR 8601993**

(43) Date de publication de la demande : **09.09.87 Bulletin 87/37**

(45) Mention de la délivrance du brevet : **02.05.91 Bulletin 91/18**

(84) Etats contractants désignés : **AT BE CH DE ES FR GB GR IT LI LU NL SE**

(56) Documents cités :
**DE-A- 3 342 026**
**FR-A- 2 415 132**
**FR-A- 2 564 339**

(56) Documents cités :
**CHEMICAL ABSTRACTS, vol. 98, no. 14, 4 avril 1983, abrégé no. 108700r, Columbus, Ohio, US; & DD-E-156 981 (VEB PUPPENFABRIK-BIGGI-WALTERSHAUSEN)06-10-1982**
**CHEMICAL ABSTRACTS, vol. 102, no. 4, 28 janvier 1985, abrégé no. 26137z, Columbus, Ohio, US; & JP-A-59 109 553 (SANYO CHEMICAL INDUSTRIES, LTD) 25-06-1984**

(73) Titulaire : **RHONE-POULENC CHIMIE**
**25, quai Paul Doumer**
**F-92408 Courbevoie Cédex (FR)**

(72) Inventeur : **Laurent, Claude**
**50, avenue du Parmelan**
**F-74000 Annecy (FR)**
Inventeur : **Rostaing, Paul**
**Les Charavelles Bâtiment Jonquille**
**F-38200 Vienne (FR)**
Inventeur : **Lyobard, René**
**71, rue Arthur Rimbaud**
**F-69800 Saint-Priest (FR)**

(74) Mandataire : **Seugnet, Jean Louis et al**
**RHONE-POULENC INTERSERVICES Service Brevets Chimie Centre de Recherches de Saint-Fons B.P. 62**
**F-69192 Saint-Fons Cédex (FR)**

EP 0 236 243 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne procédé pour l'emboutissage de tôle par élastoformage utilisant un support élastique formant matrice en élastomère de silicone et caractérisé en ce que l'élastomère comporte à l'intérieur de son réseau réticulé au moins un plastifiant des silicones organiques ou inorganiques compatible avec les silicones, demeurant stable et non-migrant dans les conditions d'emboutissage, suivant une quantité adaptée de manière à obtenir un élastomère de silicone plastifié présentant une dureté Shore 00 inférieure à environ 40, de préférence inférieure à 30, et en ce que l'élastomère silicone provient de la réticulation d'une composition organopolysiloxane fluide réticulant à température ambiante ou par chauffage par des réactions de polycondensation ou de polyaddition en présence d'un catalyseur.

Bien que la description ci-après soit plus spécialement axée sur l'élastoformage de tôles, c'est-à-dire de plaques minces généralement métalliques, il doit être entendu cependant que le procédé d'élastoformage mettant en oeuvre les supports élastiques selon la présente invention n'est nullement limitée à cette application. Ainsi le procédé d'élastoformage peut être mis en oeuvre avec des plaques minces en matières plastiques, notamment avec des plaques en polybutène, polyéthylène, polyéthylène chloré, PVC, PVC chloré, ABS (acrylonitrile, butadiène, styrène), polycarbonates, polyphénylène oxyde, polysulfones, polychlorotrifluoroéthylène, acétate butyrate de cellulose, acétate de cellulose, nylons, nylon 6, nylon 66. (Voir notamment "Polymers Engineering and Science" Mars 1971, vol. 11 n° 2 page 106).

Ainsi dans la présente description et dans les revendications il faut donner au terme "tôle" un sens général de "plaque mince" ou "feuille" sans vouloir en limiter la portée aux "produits métalliques" mais en englobant tous les produits présentant comme les métaux une certaine plasticité.

Plus spécifiquement la présente invention procédé pour l'emboutissage de tôle par élastoformage utilisant vise un support élastique en élastomère silicone utilisable sur des presses à double effet : (mécanique ou hydraulique) comme par exemple celles décrites la demande de brevet européen EP-A-165 133 citée comme référence.

Cette demande de brevet vise en particulier un procédé d'emboutissage de flans de tôles à épaisseur sensiblement constante, dénommés ci-après tôles, sur une presse à double effet, procédé selon lequel on dispose les tôles à former sur un support élastique notamment en élastomère silicone de faible dureté, on applique un premier coulisseau extérieur, ou serre-flan, sur la partie périphérique de la tôle, puis on applique un deuxième coulisseau central sur la partie centrale de la tôle ; on forme la partie périphérique de cette tôle en la laissant glisser sous le serre-flan à l'aide d'au moins une partie active du coulisseau extérieur de façon à compenser dans certaines zones de la pièce finie les surfaces excédentaires à épaisseur inchangée de la tôle de départ par rapport au volume à former, et, simultanément on déplace le coulisseau central pour conformer les volumes anguleux de la partie centrale de la tôle par application de la tôle contre les surfaces de la partie centrale du support. Dans le procédé du type ci-dessus, dans le cas où l'on doit emboutir en grande série des feuilles métalliques présentant des volumes anguleux et notamment des tôles d'acier à haute limite élastique (pour lesquelles E = 40 kg/mm$^2$) et extra-minces (épaisseur inférieure à environ 0,5 mm), le support élastique de faible dureté flue pour déformer la partie centrale de la tôle, lors de l'action de la partie active du coulisseau extérieur sur la tôle, de façon à lui donner une surface sensiblement égale à la surface de la pièce finie à obtenir. Puis on déplace le coulisseau central pour conformer les volumes anguleux de la partie centrale de la tôle par fluage final du support.

Selon une variante, on applique un premier coulisseau extérieur sur la partie périphérique de la tôle, puis on applique un deuxième coulisseau central sur la partie centrale de la tôle ; on dispose la partie périphérique de la tôle à former sur un serre-flan inférieur formant bac pour le support élastique et dont la face supérieure de maintien de la tôle est située à un niveau supérieur à celui de la face de travail du support élastique ; on applique le premier coulisseau extérieur dont le corps a un diamètre inférieur au serre-flan inférieur et qui comporte à sa périphérie un serre-flan supérieur coopérant avec le serre-flan inférieur pour serrer la tôle, on poursuit la descente du coulisseau extérieur contre le support élastique pour effectuer le tombage d'un bord du flan de tôle et on provoque le fluage de la masse du coussin élastique pour déformer la partie centrale de la tôle de façon à lui donner une surface sensiblement égale à la surface de la pièce finie à obtenir, puis on déplace le coulisseau central pour conformer les volumes anguleux et la partie centrale de la tôle par fluage final du support. Cette variante fait l'objet de la demande de brevet européen EP-A-231 677.

A la page 11 de la demande de brevet EP-A-165 133 il est indiqué que le support élastique doit avoir une dureté Shore inférieure à 30 et de préférence supérieure à 10, et qu'il peut être constitué d'un élastomère silicone éventuellement recouvert au moins en partie d'une peau relativement mince (par exemple 10 à 15 mm) en matériau plus résistant et plus dur tel qu'une silicone de dureté Shore 50 ou du téflon ayant des propriétés antifrictions favorables.

Au cours de la mise en oeuvre du procédé ci-dessus, le support élastique est soumis à des contraintes.

Les pressions peuvent atteindre 500 bars et plus. Les pressions généralement utilisées sont comprises entre 2 et 200 bars. Les cadences des presses sont comprises en général entre 10 et 60 coups par minute. Le support peut de plus être soumis à une déformation volumique de 100% ce qui correspond à un déplacement de 50% de la matière. Au vu de ces conditions de mise en oeuvre ce support élastique doit présenter notamment les propriétés suivantes :

- ne pas présenter les risques et les contraintes des fluides hydrauliques utilisés pour l'hydroformage sous tri forte pression,
- être élastique avec une grande rapidité de relaxation après déformation (retour élastique inférieur à une seconde),
- présenter une faible énergie de déformation et une faible dureté,
- être très faiblement compressible (taux de compressibilité inférieur à 5% sous 500 bars),
- être résistant à l'abrasion et à la déchirure,
- présenter une tenue à la fatigue et au vieillissement suffisante,
- présenter une tenue thermique suffisante lors de l'échauffement par friction,
- présenter un faible échauffement lors des déformations liées au procédé,
- ne pas polluer les surfaces formées en particulier si ces surfaces doivent être peintes,
- être manipulable.

Dans la demande de brevet EP-A-165 133 précitée on indique que les silicones de dureté Shore A inférieure à 10 sont utilisables mais on indique pas explicitement les moyens permettant d'obtenir un support élastique en élastomère silicone de dureté appropriée présentant l'ensemble des propriétés énoncées ci-dessus.

Dans ce qui suit, sauf mentions contraires, les pourcentages et parties sont en poids.

Un but de la présente invention est de proposer procédé pour l'emboutissage de tôle par élastoformage utilisant un support élastique en élastomère silicone présentant l'ensemble des propriétés ci-dessus et convenant pour l'élastoformage.

Ce but et d'autres sont atteints par la présente invention qui concerne en effet procédé pour l'emboutissage de tôle par élastoformage utilisant un support élastique formant matrice en élastomère silicone, caractérisé en ce que l'élastomère silicone comporte à l'intérieur de son réseau réticulé, au moins un plastifiant des silicones, organique ou inorganique, demeurant stable et non-migrant dans les conditions d'emboutissage, suivant une quantité adaptée de manière à obtenir un élastomère de silicone, plastifié, présentant une dureté Shore 00 inférieure à environ 40, de préférence inférieure à 30. Cette dureté est établie à l'aide d'un Duromètre étalonné selon la norme ASTM D 2 240.

On a pu mettre en évidence, conformément à la présente invention, que tous les élastomères de silicones ne conviennent pas pour l'emboutissage de tôles par élastoformage et qu'il est nécessaire d'utiliser un élastomère provenant de la réticulation, de préférence par coulée, d'une composition organopolysiloxane fluide réticulant soit à la température ambiante soit par chauffage à une température généralement inférieure à 150°C, par des réactions de polycondensation ou de polyaddition en présence d'un catalyseur approprié, métallique ou organique. Comme plastifiant organique ou inorganique des silicones, demeurant stable et non-migrant dans les conditions d'emboutissage, on peut utiliser les huiles hydrocarbonées organiques ou minérales, les huiles diorganopolysiloxanes, les polymères mixtes organique/diorganopolysiloxane et certains plastifiants organiques compatibles avec les silicones tels que les copolymères à blocs polyoxyalkylènes-polyorganosiloxanes, les polyalkylbenzènes obtenus par alkylation du benzène à l'aide d'oléfines à longue chaîne linéaire ou ramifiée, en particulier des oléfines à 12 atomes de carbone issues de la polymérisation du propylène, décrits par exemple dans les brevets français FR-A-2 392 476 et FR-A-2 446 849, les polybutylènes de faible poids moléculaire décrits dans les brevets français FR-A-2 256 231, FR-A-2 393 831, FR-A-2 405 985, des coupes pétrolières de point d'ébullition de préférence supérieures à 200°C formées d'un mélange d'hydrocarbures aliphatiques et/ou aromatiques.

Comme plastifiant préféré on utilise une huile diorganopolysiloxane de viscosité comprise entre 0,65 et 5 000 mPa·s à 25°C, de préférence entre 5 et 1000, en particulier celles formées d'un enchaînement de motifs de formule $R_2SiO$ et bloquée à chacune des extrémité de sa chaîne par un motif de formule $R_3SiO_{0,5}$, dans lesquelles les radicaux R sont choisis parmi les radicaux hydrocarbonés en $C_1$-$C_{10}$ tels que les radicaux méthyle, éthyle, propyle, octyle, les radicaux phényle, chlorophényle et trifluoro-3,3,3 propyle.

Les radicaux R sont plus spécifiquement choisis dans le groupe constitué par les radicaux méthyle, chlorophényle et trifluoro-3,3,3 propyle, au moins 50% en nombre des radicaux R étant des radicaux méthyle, au plus 30% en nombre étant des radicaux chlorophényle et trifluoro-3,3,3 propyle.

Les huiles ci-dessus sont disponibles chez les fabricants de silicones. En outre elles peuvent être aisément préparées par polymérisation et réarrangement, à l'aide de catalyseurs alcalins ou acides, d'un mélange approprié de diorganocyclopolysiloxanes et de diorganopolysiloxanes linéaires de faible poids moléculaire (brevets US 2 875 172 et 2 954 357). Ces huiles peuvent être utilisées seules ou en mélange avec des plastifiants organiques.

Le plastifiant peut être introduit dans le réseau réticulé de l'élastomère silicane par ajout du plastifiant à la composition fluide organopolysiloxane avant réticulation.

Une autre façon moins commode mais néanmoins possible est de tremper l'élastomère silicone réticulé dans le plastifiant.

La quantité maximum de plastifiant est définie, pour chaque type de plastifiant associé à un élastomère silicone particulier, par la quantité à partir de laquelle la composition organopolysiloxane ne réticule plus.

La quantité minimum de plastifiant à introduire est définie par la quantité à partir de laquelle on obtient une dureté Shore 00 inférieure à 40, de préférence inférieure à 30.

On a constaté de façon surprenante et inattendue que le plastifiant, en particulier lorsque ce dernier est une huile silicone, demeure intégré au réseau de l'élastomère même quand ce dernier est soumis aux conditions très sévères de pression de l'élastoformage.

Les compositions organopolysiloxanes fluides réticulables par coulée en présence d'un catalyseur métallique ou organique sont les compositions présentées le plus souvent sous forme de compositions bi-composantes (ou à 2 emballages) réticulant soit par des réactions de polyaddition essentiellement par réaction de groupes ≡ SiH portés par un silane ou un organopolysiloxane linéaire ou ramifié, sur des groupes vinyle liés aux atomes de silicium d'un organopolysiloxane, en présence d'un composé d'un métal du groupe du platine, soit par des réactions de polycondensation d'une huile alpha-oméga-dihydroxydiorganopolysiloxane avec un agent de réticulation qui est un silane portant au moins trois groupements hydrolysables (généralement des groupements alcoxy) ou un polyalcoxysiloxane provenant de l'hydrolyse partielle de ce silane, en présence d'un catalyseur métallique, généralement un composé de l'étain et/ou un composé organique comme les amines.

Ces compositions peuvent comporter en outre, mais on nécessairement, une charge minérale dont, de préférence une partie ou la totalité, est une charge siliceuse renforçante ou semi-renforçante. Cette charge renforçante ou semi-renforçante peut être entre autre de la silice de pyrogénation, de la silice de précipitation, du quartz broyé, des silices de diatomées, du talc. Les charges de bourrage utilisables sont notamment le carbonate de calcium, le mica, l'oxyde d'aluminium, les fibres et billes de verre.

Au moins une partie de la charge peut être avantageusement traitée par un siloxane tel que l'octaméthylcyclotétrasiloxane, par un silazane tel que l'hexaméthyldisilazane, par un silane tels que les chlorosilanes.

Des compositions fluides polyaddition utilisables pour réaliser des supports élastiques sont par exemple celles décrites dans les brevets US-A-3 220 972, US-A-3 697 473 et US-A-4 340 709 cités comme référence.

Des compositions fluides polycondensation utilisables pour réaliser des supports élastiques sont par exemple celles décrites dans les brevets US-A-3 888 815, US-A-4 064 096 et le brevet français FR-A-2 300 114 cités comme référence.

Les compositions fluides polyaddition encore plus préférées comportent :

A. – une huile diorganopolysiloxane vinyle de viscosité comprise entre 100 et 100000 mPa·s à 25°C ayant au moins deux radicaux vinyle par molécule, les autres radicaux étant choisis parmi les radicaux méthyle, éthyle, phényle et 3,3,3-trifluoropropyle au moins 60% en nombre des radicaux organiques étant des radicaux méthyle.

B. – un organopolysiloxane présentant au moins 3 groupes ≡ SiH par molécule choisi parmi les organopolysiloxanes ramifiés et les, diorganopolysiloxanes linéaires.

C. – éventuellement un agent de couplage qui est un diorganopolysiloxane linéaire ayant deux groupes SiH par molécule, le rapport du nombre de groupes ≡ SiH de B. + C. au nombre des radicaux vinyle de A. étant compris entre 0,7 et 2.

D. – éventuellement une charge minérale renforçante ou semi-renforçante dont, de préférence, au moins une partie est traitée.

E. – une quantité catalytiquement efficace d'un catalyseur du platine ou du groupe du platine. Cette quantité calculée en poids de platine métal, est généralement comprise entre 2 et 300 ppm par rapport au poids de A.

Comme exemples de catalyseurs utilisables, on peut citer notamment l'acide chloroplatinique $H_2PtCl_6$, les complexes platine vinylsiloxane décrits dans le brevet français FRA-1 480 409, les brevets américains US-A-3 715 334, US-A-3 775 452 et US-A-3 814 730 ainsi que les complexes du platine avec un produit organique décrits dans les brevets européens EP-A-188 978 et EP-A-190 530.

F. – un plastifiant qui est un diorganopolysiloxane de viscosité comprise entre 5 et 3000 mPa·s à 25°C, de préférence entre 10 et 1500, dont les radicaux organiques sont choisis parmi les radicaux alkyle en $C_1$-$C_{10}$, phényle, chlorophényle et trifluoro-3,3,3 propyle, au moins 80% en nombre de ces radicaux étant des radicaux méthyle.

Les compositions organopolysiloxanes comportant les constituants A, B, C, D, E sont bien connues et sont décrites en détail notamment dans les brevets US-A-3 697 473 et US-A-4 340 709 précités.

De façon à régler la dureté à la valeur désirée qui est inférieure à 40 (dureté Shore 00) on peut ajouter de 5 à environ 400 parties d'huile F., de préférence de 20 à 200 parties pour 100 parties de compositions A + B + C + D + E.

La dureté peut être également réglée par la quantité de charge ajoutée. Géralement pour 100 parties de A on ajoute 0 à 60 parties de D. L'homme de métier n'aura aucune difficulté en jouant principalement sur les quantités de D et de F à obtenir un élastomère ayant la dureté Shore 00 visée.

La composition chargée en huile F. peut être présentée en un seul ou en deux emballages.

Pour pouvoir la présenter en un seul emballage il est nécessaire d'ajouter un inhibiteur du platine par exemple ceux décrits dans le brevet US-A-3 445 420 ou la demande de brevet européen EP-A-146 422 cités comme référence.

Comme composition organopolysiloxane fluide présentée en deux emballages et réticulant par des réactions de polycondensation, on choisit plus particulièrement les compositions comportant :

A' – au moins un polymère alpha-oméga-dihydroxydiorganopolysiloxane de viscosité de 20 à 500000 mPa·s à 25°C dont les radicaux organiques sont choisis parmi les radicaux méthyle, vinyle, phényle et trifluoro-3,3,3 propyle, au moins 60% en nombre étant des radicaux méthyle, jusqu'à 20% en noire étant des radicaux phényle, au plus 2% en nombre étant des radicaux vinyle.

B' – éventuellement une charge minérale renforçante ou semi-renforçante.

C' – au moins un agent de réticulation choisi parmi les polyalcoxysilanes et les polyalcoxysiloxanes. Généralement on utilise de 0,5 à 15 parties d'agent 3. pour 100 parties d'huile 1.

D' – une quantité catalytiquement efficace d'un catalyseur à l'étain. Cette quantité est en général de 0,005 à 1 partie (calculée en poids d'étain métal) pour 100 parties d'huile 1.

E' – un plastifiant qui est un diorganopolysiloxane de viscosité comprise entre 5 et 3000 mPa·s à 25°C, de préférence entre 10 et 1500 dont les radicaux organiques sont choisis parmi les radicaux alkyle en $C_1$-$C_{10}$, phényle, chlorophényle, vinyle et trifluoro-3,3,3 propyle, au moins 80% en nombre de ces radicaux étant des radicaux méthyle.

Les compositions bi-composantes comportant les constituants 1 à 4 ci-dessus sont bien connues de l'homme de métier et sont décrites en détail notamment dans le brevet français FR-A-2 300 114 précité et dans le brevet US-A-3 642 685, le brevet britannique GB-A-1 024 234 et le brevet européen EP-A-184 522.

Les agents de réticulation 3 sont des produits bien connus décrits notamment dans les brevets français FR-A-1 330 625, FR-A-2 121 289, FR-A-2 121 631 et FR-A-2 458 572 cités comme référence.

On peut par exemple utiliser les silanes de formule :

$CH_3(Si(OCH_3)_3$

$CH_3Si(OCH_2CH_3)_3$

$CH_3Si(OCH_2CH_2OCH_3)_3$

$Si(OCH_2CH_2OCH_3)_4$

$Si(OCH_3)_4$

$Si(OCH_2CH_3)_4$

$CH_2 = CHSi(OCH_2CH_2OCH_3)_3$

$C_6H_5Si(OCH_3)_3$

$C_6H_5Si(OCH_2CH_2OCH_3)_3$

$CH_3Si(OCH_2\text{-}CHOCH_3)_3$
|
$CH_3$

Parmi les agents de réticulation 3 on préfère plus particulièrement les alkyltrialcoxysilanes, les silicates d'alkyle et les polysilicates d'alkyle dans lesquels les radicaux organiiques sont des radicaux alkyles ayant de 1 à 4 atomes de carbone.

Les silicates d'alkyle peuvent être choisis parmi le silicate de méthyle, le silicate d'éthyle, le silicate d'isopropyle, le silicate de n-propyle, et les polysilicates choisis parmi les produits d'hydrolyse partielle de ces silicates ; ce sont des polymères constitués d'une proportion importante de motifs de formule $(R^4O)_2SiO$ et d'une faible proportion de motifs de formule $(R^4O)_3SiO_{0,5}$, $R^4OSiO_{1,5}$ et $SiO_2$ ; le symbole $R_4$ représentant les radicaux méthyle, éthyle, isopropyle, n-propyle. Pour les caractériser on se base habituellement sur leur teneur en silice qui est établie par dosage du produit d'hydrolyse totale d'un échantillon.

On peut en particulier utiliser comme polysilicate, un silicate d'éthyle partiellement hydrolysé commercialisé sous la marque "Ethyl Silicate-40"® par Union Carbide Corporation, ou un silicate de propyle partiellement hydrolisé.

Le composé 4 est un composé catalytique à l'étain utilisé ou proposé pour catalyser ce type de composition, et qui peut être en particulier un sel d'étain d'un acide mono- ou dicarboxylique. Ces carboxylates d'étain sont décrits notamment dans l'ouvrage de NOLL (Chemistry and Technology of Silicones, page 337, Academic Press, 1968, 2ème édition). On peut en particulier citer le naphténate, l'octanoate, l'oléate, le butyrate, le dilaurate de dibutylétain, le diacétate de dibutylétain.

On peut également utiliser les sels d'acides monocarboxyliques ramifiés sur un atome de carbone aliphatique en position alpha par rapport au groupe carboxyle et ayant au moins 8 atomes de carbone par molécule tels que décrits dans le brevet français FR-A-2 066 159 en particulier le diversatate de dibutylétain.

On peut également utiliser comme composé catalytique à l'étain le produit de réaction d'un sel d'étain, en particulier d'un dicarboxylate d'étain sur du polysilicate d'éthyle comme décrit dans le brevet US-A-3 186 963. On peut également utiliser le produit de réaction d'un dialkyldialcoxysilane sur un carboxylate d'étain comme décrit dans le brevet US-A-3 862 919.

On peut également utiliser le produit de réaction d'un silicate d'alkyle ou d'un alkyltrialcoxysilane sur le diacétate de dibutylétain comme décrit dans le brevet belge BE-A-842 305.

De façon à régler la dureté à la valeur désirée qui est inférieure à 40 (dureté Shore 00) on peut rajouter de 50 à 500 parties d'huile E', de préférence de 80 à 250 parties pour 100 parties de composition A' + B' + C' + D'. Cette dureté peut être généralement réglée par la quantité de charge ajoutée. On ajoute généralement de 0 à 50 parties de charges pour 100 parties d'huile 1.

Selon une variante le support élastique selon l'invention peut être enveloppé sur au moins une partie de sa surface, en particulier celle en contact avec les coulisseaux et la tôle par une membrane protectrice d'élastomère plus dur, par exemple en polyuréthanne, en polybutadiène, en caoutchouc naturel ou synthétique de dureté Shore A supérieure à 30 et de préférence inférieure à 90, de préférence comprise entre 35 et 80, et d'épaisseur comprise généralement entre 0,5 et 25 mm.

Cette membrane est particulièrement utile pour assurer l'étanchéité de la matrice lors de la montée en pression et permet d'éviter de polluer la tôle par les silicones. En outre, dans le cas où les supports élastiques sont très mous, elle permet de pouvoir manipuler aisément ces supports.

Le matériau constitutif de cette membrane doit avoir des propriétés de retour élastique les plus proches possibles du support élastique pour ne pas perturber son fonctionnement.

Cette membrane prolonge également le temps d'utilisation du support élastique.

Le support élastique silicone composite du type ci-dessus peut être obtenu de différentes manières :

1. – on peut couler l'élastomère dans un récipient constitué par la membrane en élastomère plus dur, rigide, de dimensions appropriées pour que le support élastique composite soit disposé dans le conteneur du plateau (dénommé ci-après bac à matrice) recevant les coulisseaux de la presse.

2. – on peut projeter et réticuler sur les parois internes du bac à matrice la composition élastomère devant former la membrane puis couler et réticuler la composition élastomère en silicone, puis disposer ou coller sur la face supérieure du support mou réticulé par exemple au moyen d'un adhésif silicone, une pellicule de polyuréthanne.

3. – on peut disposer une couche continue de membrane autour du support élastique en élastomère silicone par moulage par rotation, ou par surmoulage sur presse.

4. – on peut couler et réticuler la composition élastomère directement dans le bac à matrice puis disposer ou coller à la surface extérieure libre du support élastique la membrane.

Bien que le pellicules en polyuréthanne et en caoutchouc donnent les meilleurs résultats, on peut toutefois les remplacer par du Téflon, par un élastomère silicone, etc.....

Le support élastique peut être constitué par un seul ou plusieurs éléments élastiques disposés côte-à-côte et/ou superposés à l'intérieur du bac à matrice.

D'autres avantages et caractéristiques de la présente invention apparaîtront à la lecture des exemples suivants de réalisation, donnés à titre illustratif nullement limitatif. La presse à double effet utilisée dans ces exemples est du type de celle décrite aux figures 5 à 9 du brevet européen EP-A-165 133 précité. La pièce réalisée est celle représentée à la figure 11 du même brevet.

<u>–EXEMPLE 1</u> :

On coule dans des moules cylindriques métalliques de diamètre interne 320 mm et de 50 mm de hauteur, la composition organopolysiloxane $A_1$ suivante :

– 100 parties d'huile diméthylpolysiloxane de viscosité 600 mPa·s à 25°C à terminaisons diméthylvinylsiloxy (0,4% en poids de groupes vinyle),

– 41,5 parties de silice de combustion de surface spécifique 300 $m^2/g$ traitée par l'hexaméthyldisilazane,

– 4 parties d'un copolymère diméthylpolysiloxane bloquées triméthylsiloxy et ayant des motifs hydrogénométhylsiloxy dans la chaîne (0,24% en poids d'atomes d'hydrogène liés au silicium) et ayant environ 120 atomes de silicium par molécule,

– 4 parties d'un polymère diméthylpolysiloxane à terminaisons diméthylhydrogénosiloxy de viscosité 30 mPa·s à 25°C,

– 20 ppm de platine sous la forme d'un complexe du platine préparé à partir de l'acide chloroplatinique et de divinyl-1,3 tétraméthyl-1,1,3,3 disiloxane comme décrit à l'exemple 4 du brevet US-A-3 814 730,

– 0,1% en poids par rapport au poids total de la composition d'inhibiteur d'octyne-2 ol-3.

Lors de la coulée, à 100 parties de la composition $A_1$ ci-dessus, on mélange 110 parties d'huile diméthylpolypolysiloxane bloquée à chacune de ses extrémités par un motif triméthylsiloxy de viscosité 50 mPa·s à 25°C. Le mélange réticule après chauffage pendant deux heures à 60°C.

On observe une très bonne homogénéité du réticulat ce qui est représentatif de la bonne miscibilité du plastifiant.

On obtient 4 supports élastomères cylindriques, de dureté Shore 00 de valeur 18, 24 heures après réticulation, que l'on empile pour remplir l'intérieur du bac à matrice de la presse à double effet. On forme une pièce identique à celle de la figure 11 du brevet européen EP-A-165 133 en utilisant une tôle d'acier HLE, E = 60 kg/mm² de 40/100 de mm d'épaisseur.

La profondeur d'emboutissage est de 80 mm, la pression est de 100 bars, on forme 20 flans par minute et on forme, sans arrêter la presse, 300000 flans sans changement du support élastique. Le plastifiant du support n'a pas exsudé.

Les pièces obtenues ont une épaisseur sensiblement constante, sans plis aux angles et ne présentent aucun défaut au niveau des rayons d'entrée de la matrice.

-EXEMPLES 2 A 5 :

Pour mettre en oeuvre ces exemples on répète le mode opératoire de l'exemple 1 sauf que l'on utilise un plastifiant silicone plus visqueux. A 100 parties de la composition $A_1$ décrite à l'exemple 1 on ajoute, lors de la coulée, X parties en poids d'huile diméthylpolysiloxane bloquée triméthylsiloxy de viscosité 100 mPa·s à 25°C.

Le mélange réticule après chauffage pendant deux heures à 80°C. On observe une très bonne miscibilité du plastifiant.

La dureté Shore 00 (DS 00) est déterminée 24 heures après réticulation. Le plastifiant n'exsude pas après passage sur la presse.

Les résultats sont rassemblés dans le tableau I ci-après :

TABLEAU I

| Exemple | 2 | 3 | 4 | 5 |
|---|---|---|---|---|
| $A_1$ | 100 | 100 | 100 | 100 |
| Plastifiant X | 37 | 46 | 110 | 140 |
| DS00 - 24 h. | 38 | 34 | 17 | 9 |

-EXEMPLES 6 A 8 :

On repète le mode opératoire de l'exemple 1 sauf que, à 100 parties de la composition $A_1$ on ajoute lors de la coulée dans le moule X parties en poids d'un plastifiant organique qui est un polyalkylbenzène obtenu par alkylation du benzène à l'aide d'oléfines issues de la polymérisation du propylène et commercialisé par la Société Française PETROSYNTHESE sous la dénomination alkylat 150 DT®.

On mesure la dureté Shore 00 (DS00) au bout de huit heures après réticulation.

On apprécie visuellement la miscibilité (B : bonne, M : médiocre) et l'exsudation (N : nulle, L : légère) sur presse dans les conditions d'utilisation de l'exemple 1. Les résultats sont rassemblés dans le tableau II ci-après:

TABLEAU II

| Exemple | 6 | 8 | 8 |
|---|---|---|---|
| $A_1$ | 100 | 100 | 100 |
| Alkylat 150DT | 20 | 30 | 40 |
| DS00 - 8 h. | 28 | 10 | 4 |
| Miscibilité | B | B | B |
| Exsudation | L | L | L |

–EXEMPLE 9 :

On coule un mélange, dans un bac à matrice rectangulaire présentant un revêtement interne continu de 3 mm d'épaisseur en polyuréthanne de dureté Shore A 55, de dimensions internes 790 mm × 358 mm et de 200 mm de hauteur, une composition fluide organopolysiloxane préparée au préalable de la façon suivante : dans un malaxeur à pales, maintenu sous atmosphère d'azote, on prépare l'empâtage suivant :

– 100 parties d'une huile diméthylpolysiloxane de viscosité 500 mPa·s à 25°C bloquée à chaque extrémité par un motif $(CH_3)_3SiO_{0,5}$,
– 40 parties d'une silice de combustion de surface spécifique 200 m²/g ayant 1,5% d'eau adsorbée,
– 32 parties d'eau distillée,
– 80 parties d'hexaméthyldisilazane.

Ce mélange est brassé pendant 6 heures à 20°C puis est dévolatilisé par chauffage à 153°C pendant 6 heures sous courant d'azote.

On ajoute alors au mélange refroidi à environ 80°C :

– 100 parties d'une huile alpha-oméga-dihydroxydiméthylpolysiloxane de viscosité 14000 mPa·s à 25°C,
– 2 parties d'huile alpha-oméga-dihydroxydiméthylpolysiloxane de viscosité 50 mPa·s à 25°C,
– 100 parties de quartz broyé de surface spécifique 5 m²/g, de diamètre particulaire moyen de 5 micromètres et ayant 1% d'eau adsorbée.

L'ensemble est malaxé pendant deux heures puis broyé.

A 1000 parties de l'empâtage précédent on ajoute et on mélange dans le bac à matrice 1003 parties d'un mélange constitué de :

– 1000 parties d'huile diméthylpolysiloxane bloquée à chaque extrémité par des motifs triméthylsiloxy de viscosité 100 mPa·s à 25°C,
– 2,4 parties de polysilicate d'éthyle,

– 0,6 partie de dilaurate de dibutylétain.

Le mélange réticule à froid en 24 heures.

On observe une très bonne miscibilité du plastifiant.

Le support élastique a une dureté Shore 00 de 30, 24 heures après réticulation.

Après réticulation on contre-colle une pellicule de polyuréthanne de dureté Shore A 55 et de 3 mm d'épaisseur à la totalité de la surface supérieure libre du support élastique délimitée par le bord du bac de polyuréthanne, en utilisant un adhédif silicone.

On utilise les mêmes flans de tôle qu'à l'exemple 1 en vue d'élastoformer des pièces présentant la même forme.

La profondeur d'emboutissage est de 100 mm.

La pression est de 100 bars, on forme 20 flans par minute et on forme sans arrêter la presse et sans changer le support élastique 200000 flans.

Les pièces obtenues présentent la même qualité que celle obtenue à l'exemple 1.

Le plastifiant n'a pas exsudé du support.

–EXEMPLE 10 :

On prépare une composition $C_1$ par mélange de :

– 100 parties d'une huile alpha-oméga-dihydroxydiméthylpolysiloxane, de viscosité 60000 mPa·s à 25°C,

– 95 parties d'une huile diméthylpolysiloxane bloquée à chaque extrémité par un motif $(CH_3)_3SiO_{0,5}$, de viscosité 50 mPa·s à 25°C,

– 135 parties de quartz broyé de granulométrie comprise entre 0,5 et 10 micromètres contenant 400 ppm d'eau.

A 100 parties de la composition $C_1$ ci-dessus on ajoute 2 parties de polysilicate d'éthyle et 0,35 parties de dilaurate de dibutylétain. On obtient une composition $C_2$.

Lors de la coulée, à 100 parties de composition $C_2$ on ajoute 60 parties d'une huile diméthylpolysiloxane bloquée à chaque extrémité par un motif $(CH_3)_3SiO_{0,5}$ de viscosité 100 mPa·s à 25°C. L'ensemble réticule à température ambiante dans le même moule cylindrique que celui utilisé à l'exemple 1.

La dureté Shore 00 au bout de 24 heures est de 26. La miscibilité de l'huile plastifiante est très bonne et cette huile n'exsude pas même après utilisation sur la presse dans les mêmes conditions qu'à l'exemple 1.

–EXEMPLES 11 ET 12 :

On répète le mode opératoire de l'exemple 10 sauf qu'à 100 parties de composition $C_2$ on ajoute lors de la coulée X parties de la même huile plastifiante.

La miscibilité est bonne et l'on n'observe pas d'exsudation. La dureté Shore 00 est mesurée au bout de 24 heures après réticulation.

Les résultats sont rassemblés dans le tableau III ci-après :

TABLEAU III

| Exemple | 11 | 10 | 12 |
|---|---|---|---|
| $C_2$ | 100 | 100 | 100 |
| Plastifiant X | 40 | 60 | 100 |
| DS 00 | 35 | 26 | 12 |

-EXEMPLES 13 A 16 :

Pour mettre en oeuvre ces exemples on part de 100 parties de la composition $C_2$ décrite à l'exemple 10 et on ajoute lors de la coulée X parties en poids d'alkylat qui est un polyalkylbenzène obtenu par alkylation du benzène à l'aide d'oléfines issues de la polymérisation du propylène et commercialisé pas la Société Française de PETROSYNTHESE sous la dénomination commerciale Alkylat 150 DT®. On coule la composition dans le moule cylindrique utilisé à l'exemple 1. On mesure la dureté Shore 00. On apprécie visuellement la miscibilité (B : bonne, M : médiocre) et l'exsudation (N : nulle, L : légère) sur presse dans les conditions d'utilisation de l'exemple 1.

Les résultats sont rassemblés dans le tableau IV ci-après (DS 00 = dureté Shore 00) :

TABLEAU IV

| Exemple | 13 | 14 | 15 | 16 |
|---|---|---|---|---|
| $C_2$ | 100 | 100 | 100 | 100 |
| Alkylat | 30 | 40 | 50 | 60 |
| DSOO | 40 | 38 | 35 | 28 |
| Miscibilité | B | B | B | B |
| Exsudation | L | L | L | L |

-EXEMPLES 17 A 25 :

On effectue exactement les mêmes opérations qu'aux exemples 12 à 16 sauf que l'on remplace l'alkylat par un copolymère présentant des motifs diméthylsiloxy et tétrachlorophénylsiloxy bloqué triméthylsiloxy, commercialisé par RHONE-POULENC sous la dénomination commerciale HUILE 508 V 70 et provenant de la cohydrolyse de tétrachlorophényltrichlorosilane, de diméthyldichlorosilane et de triméthylchlorosilane. La dureté Shore 00 est mesurée au bout de 24 heures.

Les résultats sont rassemblés dans le tableau V ci-après :

TABLEAU V

| EXEMPLE | 17 | 18 | 19 | 20 | 21 | 22 | 23 | 24 | 25 |
|---|---|---|---|---|---|---|---|---|---|
| $C_2$ | 100 | 100 | 100 | 100 | 100 | 100 | 100 | 100 | 100 |
| 508 V 70 X | 30 | 30 | 40 | 50 | 60 | 70 | 80 | 90 | 100 |
| DS00 - 24 h. | 40 | 39 | 33 | 30 | 25 | 22 | 15 | 12 | 6 |
| Miscibilité | B | B | B | B | B | B | B | B | B |
| Exsudation | N | N | N | N | N | N | N | N | N |

-EXEMPLES 26 A 32 :

On effectue exactement les mêmes opérations qu'aux exemples 12 à 16 sauf que l'on remplace l'alkylat par une coupe pétrolière présentant un point d'ébullition d'environ 250 °C formée essentiellement d'hydrocarbures aliphatiques et commercialisée par la Société ESSO-CHIMIE sous la dénomination commerciale EXSOL D 100®.

La dureté Shore 00 est mesurée après 24 heures et après 15 jours (après réticulation à température ambiante).

Les résultats sont rassemblés dans le tableau VI ci-après :

TABLEAU VI

| EXEMPLE | 26 | 27 | 28 | 29 | 30 | 31 | 32 |
|---|---|---|---|---|---|---|---|
| $C_2$ | 100 | 100 | 100 | 100 | 100 | 100 | 100 |
| EXSOL-X | 40 | 50 | 60 | 70 | 80 | 90 | 100 |
| DS00 - 24 h. | 40 | 35 | 25 | - | - | - | - |
| DS00 - 15 j. | 40 | 38 | 30 | 20 | 15 | 5 | 2 |
| Miscibilité | B | B | B | B | B | B | B |
| Exsudation | N | N | N | N | N | N | N |

-EXEMPLES 33 A 37 :

On effectue exactement les mêmes opérations qu'aux exemples 12 à 16 sauf que l'on remplace l'alkylat par un polybutylène de faible poids moléculaire (environ 455) commercialisé par la Société B.P. CHIMIE sous la dénonation commerciale NAPVIS D07®.

La dureté Shore 00 est mesurée au bout de 8 heures après réticulation à température ambiante.

Les résultats sont rassemblés dans le tableau VII ci-après :

TABLEAU VII

| EXEMPLE | 33 | 34 | 35 | 36 | 37 |
|---|---|---|---|---|---|
| $C_2$ | 100 | 100 | 100 | 100 | 100 |
| D 07 X | 30 | 40 | 50 | 60 | 70 |
| DSOO | 40 | 35 | 30 | 25 | 25 |
| Miscibilité | B | B | B | B | B |
| Exsudation | N | L | L | L | Forte |

## Revendications

1. Procédé pour l'emboutissage de tôle par élastoformage utilisant un support élastique formant matrice en élastomère de silicone et caractérisé en ce que l'élastomère comporte à l'intérieur de son réseau réticulé au moins un plastifiant des silicones organiques ou inorganiques compatible avec les silicones, demeurant stable et non-migrant dans les conditions d'emboutissage, suivant une quantité adaptée de manière à obtenir un élastomère de silicone plastifié présentant une dureté Shore 00 inférieure à environ 40, de préférence inférieure à 30, et en ce que l'élastomère silicone provient de la réticulation d'une composition organopolysiloxane fluide réticulant à température ambiante ou par chauffage par des réactions de polycondensation ou de polyaddition en présence d'un catalyseur.

2. Procédé selon la revendication 1, caractérisé en ce que le plastifiant est choisi parmi les huiles hydrocarbonées organiques et minérales, les huiles diorganopolysiloxanes, les plastifiants organiques et les polymères mixtes organique/diorganopolysiloxane.

3. Procédé selon la revendication 1 ou 2, caractérisé en ce que le plastifiant est une huile diorganopolysiloxane de viscosité comprise entre 0,65 et 5000 mPa·s à 25°C, de préférence entre 5 et 1000 mPa·s à 25°C.

4. Procédé selon l'une quelconque des revendications précédentes, caractérisé en ce que l'élastomère provient de la réticulation d'une composition organopolysiloxane comportant :

A. une huile diorganopolysiloxane vinylée de viscosité comprise entre 100 et 100000 mPa·s à 25°C ayant au moins deux radicaux vinyle par molécule, les autres radicaux étant choisis parmi les radicaux méthyle, éthyle, phényle et 3,3,3-trifluoropropyle au moins 60% en nombre des radicaux organiques étant des radicaux méthyle.

B. un organopolysiloxane présentant au moins 3 groupes ≡ SiH par molécule choisi parmi les organopolysiloxanes ramifiés et les diorganopolysiloxanes linéaires.

C. éventuellement un agent de couplage qui est un diorganopolysiloxane linéaire ayant deux groupes ≡

SiH par molécule, le rapport du nombre de groupes ≡ SiH de B. + C. au nombre des radicaux vinyle de A. étant compris entre 0,7 et 2.

D. une charge minérale renforçante ou semi-renforçante dont, de préférence, au moins une partie est traitée.

E. une quantité catalytiquement efficace d'un catalyseur d'un métal du groupe du platine.

F. un plastifiant qui est un diorganopolysiloxane de viscosité comprise entre 5 et 3000 mPa·s à 25°C, de préférence entre 10 et 1500, dont les radicaux organiques sont choisis parmi les radicaux alkyle en $C_1$-$C_{10}$, phényle, chlorophényle et trifluoro-3,3,3 propyle, au moins 80% en nombre de ces radicaux étant des radicaux méthyle.

5. Procédé selon la revendication 4, caractérisé en ce qu'on ajoute de 5 à 400 parties, de préférence de 20 à 200 parties d'huile F pour 100 parties de A + B + C + D + E.

6. Procédé selon l'une quelconque des revendications 1 à 3, caractérisé en ce que l'élastomère provient de la réticulation d'une composition organopolysiloxane comportant :

A'. au moins un polymère alpha-oméga-dihydroxydiorganopolysiloxane de viscosité de 20 à 500000 mPa·s à 25°C dont les radicaux organiques sont choisis parmi les radicaux méthyle, vinyle, phényle et trifluroro-3,3,3 propyle, au moins 60% en nombre étant des radicaux méthyle, jusqu'à 20% en nombre étant des radicaux phényle, au plus 2% en nombre étant des radicaux vinyle.

B'. une charge minérale renforçante ou semi-renforçante.

C'. au moins un agent de réticulation choisi parmi les polyalcoxysilanes et les polyalcoxysiloxanes.

D'. une quantité catalytiquement efficace d'un catalyseur à l'étain.

E'. un plastifiant qui est un diorganopolysiloxane de viscosité comprise entre 5 et 3000 mPa·s a 25°C, de préférence entre 10 et 1500 dont les radicaux organiques sont choisis parmi les radicaux alkyle en $C_1$-$C_{10}$, phényle, chlorophényle, vinyle et trifluoro-3,3,3 propyle, au moins 80% en nombre de ces radicaux étant des radicaux méthyle.

7. Procédé selon la revendication 6, caractérisé en ce qu'on ajoute de 50 à 500 parties d'huile E', de préférence entre 80 et 250 pour 100 parties de composition A' + B' + C' + D'.

8. Procédé selon l'une quelconque des revendictions précédentes, caractérisé en ce que le support est enveloppé sur au moins une partie de sa surface par une membrane d'élastomère dur d'épaisseur comprise entre 0,5 et 25 mm et de dureté Shore A comprise entre 30 et 90, de préférence entre 35 et 80.

9. Procédé selon la revendication 8, caractérisé en ce que l'élastomère dur est choisi parmi le polyuréthanne, le polybutadiène et le caoutchouc naturel.

10. Procédé selon l'une quelconque des revendications précédentes, caractérisé en ce que le support élastique est constitué de plusieurs éléments élastiques disposés côte-à-côte et/ou superposés à l'intérieur du bac à matrice.

11. Procédé de préparation d'un support élastique tel que défini à l'une quelconque des revendications 1 à 3, caractérisé en ce que le plastifiant est introduit dans le composition organopolysiloxane avant sa réticulation.

12. Procédé selon l'une quelconque des revendications précédentes, caractérisé en ce que l'emboutissage de tôles par élastoformage est effectué sur une presse à double effet.

## Claims

1. Process for stamping metal sheet by elastoforming employing a resilient support forming a silicone elastomer die and characterized in that the elastomer comprises within its crosslinked network at least one plasticizer for organic or inorganic silicones which is compatible with the silicones, remaining stable and nonmigrating under the stamping conditions, in a quantity adapted so as to obtain a plasticized silicone elastomer exhibiting a Shore 00 hardness lower than approxiately 40, preferably lower than 30, and in that the silicone elastomer originates from the crosslinking of a fluid organopolysiloxane composition crosslinking at room temperature or when heated, by polycondensation or polyaddition reactions in the presence of a catalyst.

2. Process according to Claim 1, characterized inthat the plasticizer is chosen from organic and mineral hydrocarbon oils, diorganopolysiloxane oils, organic plasticizers and mixed organic/diorganopolysiloxane polymers.

3. Process according to Claim 1 or 2, characterized in that the plasticizer is a diorganopolysiloxane oil with a viscosity of between 0.65 and 5,000 mPa s at 25°C, preferably between 5 and 1,000 mPa s at 25°C.

4. Process according to any one of the preceding claims, characterized in that the elastomer originates from the crosslinking of an organopolysiloxane composition comprising :

A. a vinylated diorganopolysiloxane oil with a viscosity of between 100 and 100,000 mPa s at 25°C containing at least two vinyl radicals per molecule, the other radicals being chosen from methyl, ethyl, phenyl and 3,3,3-trifluoropropyl radicals, at least 60% of the number of the organic radicals being methyl radicals,

B. an organopolysiloxane containing at least 3 ≡SiH groups per molecule, chosen from branched organopolysiloxanes and linear diorganopolysiloxanes,

C. optionally a coupling agent which is a linear diorganopolysiloxane containing two ≡SiH groups per molecule, the ratio of the number of the ≡SiH groups of B. + C. to the number of the vinyl radicals of A. being between 0.7 and 2,

D. a reinforcing or semireinforcing inorganic filler, preferably at least a part of which is treated,

E. a catalytically effective quantity of a platinum group metal catalyst,

F. a plasticizer which is a diorganopolysiloxane with a viscosity of between 5 and 3,000 mPa s at 25°C, preferably between 10 and 1,500, in which the organic radicals are chosen from $C_1$-$C_{10}$ alkyl, phenyl, chlorophenyl and 3,3,3-trifluoropropyl radicals, at least 50% of the number of these radicals being methyl radicals.

5. Process according to Claim 4, characterized in that from 5 to 400 parts, preferably from 20 to 200 parts, of oil F are added per 100 parts of A + B + C + D + E.

6. Process according to any one of Claims 1 to 3, characterized in that the elastomer originates from the crosslinking of an organopolysiloxane composition comprising :

A'. at least one alpha,omega-dihydroxydiorganopolysiloxane polymer with a viscosity of 20 to 500,000 mPa s at 25°C, in which the organic radicals are chosen from methyl, vinyl, phenyl and 3,3,3-trifluoropropyl radicals, at least 60% of the number being methyl radicals, up to 20% of the number being phenyl radicals, not more than 2% of the number being vinyl radicals,

B'. - a reinforcing or semireinforcing inorganic filler,

C'. at least one crosslinking agent chosen from polyalkoxysilanes and polyalkoxysiloxanes,

D'. a catalytically effective quantity of a tin catalyst,

E'. a plasticizer which is a diorganopolysiloxane with a viscosity of between 5 and 3,000 mPa s at 25°C, preferably between 10 and 1,500, in which the organic radicals are chosen from $C_1$-$C_{10}$ alkyl, phenyl, chlorophenyl, vinyl and 3,3,3-trifluoropropyl radicals, at least 80% of the number of these radicals being methyl radicals.

7. Process according to Claim 6, characterized in that from 50 to 500, preferably between 80 and 250 parts of oil E' are added per 100 parts of composition A' + B' + C' + D'.

8. Process according to any one of the preceding claims, characterized in that the support is enclosed over at least a part of its surface by a hard elastomer membrane with a thickness of between 0.5 and 25 mm and a Shore A hardness of between 30 and 90, preferably between 35 and 80.

9. Process according to Claim 8, characterized in that the hard elastomer is chosen from polyurethane, polybutadiene and natural rubber.

10. Process according to any one of the preceding claims, characterized in that the resilient support consists of a number of resilient members arranged side by side and/or superposed inside the die pan.

11. Process for preparing a resilient support such as defined in any one of Claims 1 to 3, characterized in that the plasticizer is introduced into the organopolysiloxane composition before its crosslinking.

12. Process according to any one of the preceding claims, characterized in that the stamping of metal sheets by elastoforming is carried out in a double-action press.

## Ansprüche

1. Verfahren zum Tiefziehen von Blech durch Elastoformung unter Verwendung eines elastischen Trägers, der eine Matrize aus Siliconelastomerem bildet, dadurch gekennzeichnet, daß das Elastomere im Inneren seines verneizien Gitters mindestens einen Weichmacher aus organischen oder anorganischen Siliconen enthält, der mit den Siliconen, die unter den Tiefziehbedingungen stabil und nicht-wandernd bleiben, verträglich ist, entsprechend einer angepaßten Menge derart, daß ein plastifiziertes Siliconelastomeres erhalten wird, das eine Shorehärte 00 unterhalb etwa 40, vorzugsweise unterhalb 30, aufweist, und daß das Siliconelastomere von der Vernetzung einer fluiden Organopolysiloxan-Zusammensetzung stammt, die bei Umgebungstemperatur oder durch Erhitzen durch Polykondensations- oder Polyadditionsreaktionen in Gegenwart eines Katalysators vernetzt.

2. Verfahren gemäß Anspruch 1, dadurch gekennzeichnet, daß der Weichmacher ausgewält ist unter den organischen und mineralischen Kohlenwasserstoffölen, den Diorganopolysiloxanölen, den organischen Weichmachern und den organisch/Diorganopolysiloxan-gemischten Polymeren.

3. Verfahren gemäß Anspruch 1 oder 2, dadurch gekennzeichnet, daß der Weichmacher ein Diorganopolysiloxanöl der Viskosität zwischen 0,65 und 5000 mPa·s bei 25°C, vorzugsweise zwischen 5 und 1000 mPa·s bei 25°C, ist.

4. Verfahren gemäß einem der vorhergehenden Ansprüche, dadurch gekennzeichnet, daß das Elastomere von der Vernetzung einer Organopolysiloxan-Zusammensetzung stammt, enthaltend :

(A) ein vinyliertes Diorganopolysiloxanöl der Viskosität zwischen 100 und 100000 mPa·s bei 25°C mit mindestens zwei Vinylresten pro Molekül, wobei die anderen Reste ausgewählt sind unter den Methyl-, Ethyl-, Phenyl- und 3,3,3-Trifluorpropylresten, wobei mindestens 60% zahlenmäßig der organischen Reste Methylreste sind ;

(B) ein Organopolysiloxan mit mindestens 3 Gruppen ≡ SiH pro Molekül, ausgewählt unter den verzweigten Organopolysiloxanen und den linearen Diorganopolysiloxanen ;

(C) gegebenenfalls ein Kupplungsmittel, das ein lineares Diorganopolysiloxan mit zwei ≡ SiH-Gruppen pro Molekül ist, wobei das Verhältnis der Zahl der ≡ SiH-Gruppen von B + C zur Zahl der Vinylreste von A zwischen 0,7 und 2 liegt ;

(D) einen verstärkenden oder halbverstärkenden, mineralischen Füllstoff, von dem vorzugsweise mindestens ein Teil behandelt ist ;

(E) eine katalytisch wirksame Menge eines Katalysators eines Metalls vier Gruppe des Platins ;

(F) einen Weichmacher, der ein Diorganopolysiloxan der Viskosität zwischen 5 und 3000 mPa·s bei 25°C, vorzugsweise zwischen 10 und 1500, ist, dessen organische Reste ausgewählt sind unter den $C_1$-$C_{10}$-Alkylresten, Phenyl-, Chlorphenyl- und 3,3,3-Trifluorpropylresten, wobei mindestens 80% zahlenmäßig dieser Reste Methylreste sind.

5. Verfahren gemäß Anspruch 4, dadurch gekennzeichnet, daß man 5 bis 400 Teile, vorzugsweise 20 bis 200 Teile, des Öls F für 100 Teile A +B + C + D + E zusetzt.

6. Verfahren gemäß einem der Ansprüche 1 bis 3, dadurch gekennzeichnet, daß das Elastomere von der Vernetzung einer Organopolysiloxan-Zusammensetzung stammt, enthaltend :

(A′) mindestens ein alpha-omega-Dihydroxydiorganopolysiloxan-Polymeres der Viskosität 20 bis 500000 mPa·s bei 25°C, dessen organische Reste ausgewählt sind unter den Methyl-, Vinyl-, Phenyl- und 3,3,3-Trifluorpropylresten, wobei mindestens 60% zahlenmäßig Methylreste sind, bis zu 20% zahlemäßig Phenylreste sind, höchstens 2% zahlenmäßig Vinylreste sind ;

(B′) einen verstärkenden oder halbverstärkenden, mineralischen Fülstoff ;

(C′) Mindestens ein Vernetzungsmittel, ausgewählt unter den Polyalkoxysilanen und den Polyalkoxysiloxnen ;

(D′) eine katalytisch wirksame Menge eines Katalysators mit Zinn ;

(E′) einen Weichmacher, der ein Diorganopolysiloxan der Viskosität zwischen 5 und 3000 mPa·s bei 25°C, vorzugsweise zwischen 10 und 1500, ist, dessen organische Reste ausgewählt sind unter den $C_1$-$C_{10}$-Alkylresten, Phenyl-, Chlorphenyl-, Vinyl- und 3,3,3-Trifluorpropylresten, wobei mindestens 80% zahlenmäßig dieser Reste Methylreste sind.

7. Verfahren gemäß Anspruch 6, dadurch gekennzeichnet, daß man 50 bis 500 Teile Öl E′, vorzugsweise zwischen 80 und 250 je 100 Teile Zusammensetzung A′ + B′ + C′ + D′ zusetzt.

8. Verfahren gemäß einem der vorhergehenden Ansprüche, dadurch gekennzeichnet, daß der Träger auf mindestens einem Teil seiner Oberfläche durch eine harte Elastomerenmembran mit einer Dicke zwischen 0,5 und 25 mm und einer Shorehärte A zwischen 30 und 90, vorzugsweise zwischen 35 und 80, umhüllt ist.

9. Verfahren gemäß Anspruch 8, dadurch gekennzeichnet, daß das harte Elastomere ausgewählt ist unter Polyurethan, Polybutadien und natürlichem Kautschuk.

10. Verfahren gemäß einem der vorhergehenden Ansprüche, dadurch gekennzeichnet, daß der elastische Träger aus mehreren elastischen Elementen besteht, die Seite an Seite und/oder übereinander im Inneren der Matrizenwanne angeordnet sind.

11. Verfahren zur Herstellung eines elastischen Trägers, wie er in einem der Ansprüche 1 bis 3 definiert ist, dadurch gekennzeichnet, daß der Weichmacher in die Organopolysiloxan-Zusammensetzung vor ihrer Vernetzung eingeführt wird.

12. Verfahren gemäß einem der vorhergehenden Ansprüche, dadurch gekennzeichnet, daß das Tiefziehen der Bleche durch Elastoformung auf einer doppelt wirkenden Presse durchgeführt wird.